(19) Europäisches Patentamt
European Patent Office
Office européen des brevets

(11) EP 4 700 223 A1

(12) EUROPEAN PATENT APPLICATION
published in accordance with Art. 153(4) EPC

(43) Date of publication:
25.02.2026 Bulletin 2026/09

(21) Application number: 24793029.0

(22) Date of filing: 18.04.2024

(51) International Patent Classification (IPC):
F02D 41/00 (2006.01)        F02D 19/06 (2006.01)
F02D 35/02 (2006.01)        F02D 41/30 (2006.01)

(52) Cooperative Patent Classification (CPC):
Y02T 10/30

(86) International application number:
PCT/KR2024/005210

(87) International publication number:
WO 2024/219844 (24.10.2024 Gazette 2024/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.04.2023 KR 20230052949

(71) Applicants:
• HD Korea Shipbuilding & Offshore Engineering
Co., Ltd.
Seongnam-si, Gyeonggi-do 13553 (KR)

• Hyundai Heavy Industries Co., Ltd.
Ulsan 44032 (KR)

(72) Inventors:
• LEE, Ho Jun
Seongnam-si, Gyeonggi-do 13553 (KR)
• SI, Woo Sung
Seongnam-si, Gyeonggi-do 13553 (KR)

(74) Representative: Beck Greener LLP
Fulwood House
12 Fulwood Place
London WC1V 6HR (GB)

(54) **MULTI-FUEL ENGINE SYSTEM AND METHOD FOR CONTROLLING SAME**

(57) An aspect of the present disclosure provides a method for controlling a multi-fuel engine system configured use gas fuel and hydrogen, wherein maximum pressure and center of combustion of a cylinder may be detected while the multi-fuel engine system is operated, and a ratio of hydrogen to be mixed with gas fuel may be determined on the basis of the detected maximum pressure and center of combustion in the cylinder.

EP 4 700 223 A1

FIG.1

**Description**

[Technical Field]

CROSS-REFERENCE TO RELATED APPLICATION

This application claims the benefit of priority to Korean Patent Application No. 10-2023-0052949, filed in the Korean Intellectual Property Office on April 21, 2023, the entire contents of which are incorporated herein by reference.

Technical field

The present disclosure relates to a multi-fuel engine system and a method for controlling the same, and more particularly, to a multi-fuel engine system, which is capable of adjusting a proportion of eco-friendly fuel, such as hydrogen, by adjusting an EGR rate, thereby reducing the emission of greenhouse gas, and a method for controlling the same.

[Background Art]

A dual-fuel engine system is configured to selectively or simultaneously use liquid fuel (e.g. diesel) and gas fuel (e.g. natural gas). The dual-fuel engine system may satisfy economic efficiency and eco-friendliness.

The dual-fuel engine system has a gas fuel operating mode for using gas fuel and a liquid fuel operating mode for using liquid fuel.

The liquid fuel is injected into a combustion chamber by a main injector provided in each cylinder head, and the gas fuel is distributed to a distribution pipe for each cylinder from a main feed pipe and then injected to an intake port of the cylinder head through a gas admission valve (GAV).

The dual-fuel engine system has a micro-pilot injector for igniting the gas fuel because the dual-fuel engine system is based on a diesel engine, which compresses intake air at a high temperature and a high pressure to perform self ignition, which is different from a gasoline engine which spark-ignites fuel by an ignition plug. The gas fuel, such as natural gas, has a low flash point but has a high self ignition temperature of about 550°C. Accordingly, in the gas fuel operating mode, a small amount of pilot fuel (e.g., diesel) is injected through a pilot injector (a pilot injection process) to induce ignition, immediately before the gas fuel, which is main fuel, is injected (a main injection process). Accordingly, the stable ignition of the gas fuel may be stably induced. In addition, even in the liquid fuel operating mode, a small amount of pilot fuel (e.g., diesel) is injected through the pilot injector, immediately before the liquid fuel is injected. Accordingly, a combustion environment of a combustion chamber may be improved, thereby improving NOx and combustion performance.

However, the dual-fuel engine system has a limit to properly meet regulations for the emission of greenhouse gas, which are strengthened, solely by using gas fuel and/or liquid fuel.

The matter described in the Background art is made for the convenience of explanation, and may include matters other than a prior art well known to those skilled in the art.

[Disclosure]

[Technical Problem]

The present disclosure is suggested by considering the above description. An aspect of the present disclosure provides a multi-engine system, capable of adjusting a proportion of eco-friendly fuel and an EGR rate, thereby reducing the emission of greenhouse gas, and a method for controlling the same.

Problems to be solved in an embodiment are not limited thereto. Objectives and effects to be understood from means for solving the problems or embodiments may be included.

[Technical Solution]

To accomplish the above objectives, an aspect of the present disclosure may be provide a method for controlling a multi-fuel engine system configured use gas fuel and hydrogen, in which maximum pressure and center of combustion of a cylinder may be detected during the operation of the multi -fuel engine system, and a proportion of hydrogen to be mixed with the gas fuel may be determined based on the detected maximum pressure and the detected center of combustion of the cylinder

According to an embodiment, the controller may determine whether a condition in which hydrogen is allowed to be mixed with the gas fuel is satisfied during an operation of the multi-fuel engine system, and determine a proportion of hydrogen to be mixed with the gas fuel, depending on whether the condition in which hydrogen is allowed to be mixed with gas fuel is satisfied.

According to an embodiment, the condition in which hydrogen is allowed to be mixed with the gas fuel may be a condition in which the detected maximum pressure of the cylinder is at most design pressure of the cylinder, and the detected center of combustion is at least set center of combustion.

According to an embodiment, the proportion of the hydrogen may be increased to be maintained to be at most a set proportion, when the condition in which hydrogen is allowed to be mixed with the gas fuel is satisfied.

According to an embodiment, whether the condition in which hydrogen is allowed to be mixed with the gas fuel is satisfied, may be re-determined after the proportion of hydrogen is increased, and the proportion of hydrogen may be decreased to the proportion of hydrogen before the proportion of hydrogen is increased, when the condition in which hydrogen is allowed to be mixed with the gas fuel is not satisfied.

According to an embodiment, the controller may be detect an EGR during an operation of the multi-fuel engine system, increase an EGR rate to be maintained to be at most a set EGR rate, and increase the proportion of hydrogen based on the increased EGR rate.

According to an embodiment, the EGR rate may be increased to be maintained to be at most the set EGR rate, when the condition in which hydrogen is allowed to be mixed with the gas fuel is not satisfied, and whether the condition in which hydrogen is allowed to be mixed with the gas fuel is satisfied, may be re-determined, after the EGR rate is increased.

According to an embodiment, the proportion of the hydrogen may be increased based on the increased EGR rate to be maintained to be at most a set proportion, when the condition in which hydrogen is allowed to be mixed with the gas fuel is satisfied after the EGR rate is increased.

According to an embodiment, the EGR rate may be decreased to the EGR rate before the EGR rate is increased, when the condition for allowing hydrogen to be mixed with the gas fuel is not satisfied after the EGR rate is increased.

According to an embodiment, an inlet-side temperature of a turbine of a turbocharger may be at most a set temperature, when the condition for allowing hydrogen to be mixed with the gas fuel is satisfied, after the EGR rate is increased, the proportion of hydrogen may be increased, based on the increased EGR rate, to be maintained to at moat the set proportion, when the intake-side temperature of the turbine is at most the set temperature, and the EGR rate may be decreased to an EGR rate before the EGR rate is decreased, when the inlet-side temperature of the turbine exceeds the set temperature.

According to an embodiment, a multi-fuel engine system may include a cylinder including a combustion chamber, an intake port communicating with the combustion chamber, and an exhaust port communicating with the combustion chamber, a gas inflow valve configured to inject at least one of gas fuel or a mixture of the gas fuel and hydrogen into the intake port, and a controller configured to determine a proportion of hydrogen to be mixed with the gas fuel, based on maximum pressure of the cylinder, and center of combustion of the cylinder.

According to an embodiment, the multi-fuel engine system may further include a gas fuel supply source fluidly connected to the gas inflow valve through a gas fuel supply pipe, a gas fuel control valve disposed in the gas fuel supply pipe, a hydrogen supply source fluidly connected to the gas inflow valve through a hydrogen supply pipe, and a hydrogen control valve disposed in the hydrogen supply pipe, The controller may be configured to control a flow rate control valve in the gas fuel supply pipe and a flow rate control value in the hydrogen supply pipe.

The gas fuel supply pipe and the hydrogen supply pipe may be jointed with each other in a main supply pipe, and the main supply pipe may be linked to the gas inflow valve.

The controller may be configured to detect an EGR rate during an operation of the multi-fuel engine system, increase the EGR rate to be maintained to be at most a set EGR rate, and increase the proportion of hydrogen based on the increased EGR rate.

The controller may be configured to determine whether a condition in which hydrogen is allowed to be mixed with the gas fuel is satisfied during an operation of the multi-fuel engine system, and determine a proportion of hydrogen to be mixed with the gas fuel, depending on whether the condition in which hydrogen is allowed to be mixed with gas fuel is satisfied.

[Advantageous Effects]

According to the present disclosure, the multi-fuel engine system may be operated using the mixture the gas fuel and the eco-friendly fuel (decarbonized fuel), thereby reducing the emission of greenhouse gas (nitrogen gas or methane gas).

Particularly, the proportion of hydrogen mixed with the gas fuel may be optimally set, based on the maximum pressure, the center of combustion, and the EGR rate, thereby decreasing the internal maximum pressure of the cylinder, and relatively delaying a combustion rate (the center of combustion). Accordingly, the emission of the greenhouse gas (nitrogen oxide or methane gas) may be reduced.

According to the present disclosure, the EGR rate may be increased to be maintained to be at most a set EGR rate and the proportion of hydrogen may be increased to be maintained to be at most a set proportion of hydrogen, thereby improving the combustion efficiency of the multi-fuel engine system and rapidly decreasing the emission of the greenhouse gas (nitrogen oxide or methane gas).

[Description of Drawings]

FIG. 1 is a view illustrating a multi-fuel engine system, according to an embodiment of the present disclosure;

FIG. 2 is a view illustrating a method for controlling a multi-fuel engine system, according to an embodiment of the present disclosure;

FIG. 3 is a view illustrating a method for controlling a multi-fuel engine system, according to an embodiment of the present disclosure in detail;

FIG. 4 is a view illustrating that the center of combustion detected is at least a set center of combustion; and

FIG. 5 is a view illustrating that the detected maximum pressure of a cylinder is at most set pressure of the cylinder.

[Mode for Invention]

Hereinafter, some embodiments of the present disclosure will be described in detail with reference to the exemplary drawings. In the following description, the same reference numerals will be assigned to the same components even though the elements are illustrated in different drawings. In addition, in the following description, a detailed description of well-known features or functions will be ruled out in order not to unnecessarily obscure the gist of the present disclosure.

In addition, in the following description of components according to an embodiment of the present disclosure, the terms 'first', 'second', 'A', 'B', '(a)', and '(b)' may be used. These terms are merely intended to distinguish one component from another component, and the terms do not limit the nature, sequence or order of the constituent components.

According to an embodiment of the present disclosure, he singular terms are intended to include the plural forms as well, unless the context clearly indicates otherwise. When at least one (or one or more) of "A" and "B" and "C" is set force, the at least one (or one or more) of "A" and "B" and "C" may include at least one of all combinations of "A", "B", or "C".

In addition, when a certain component is "linked", "coupled", or "connected" to another component in description, the certain component may be directly "linked", "coupled", or "connected" to the another component, or the certain component may be "linked", "coupled", or "connected" to the another component through a still another component between the certain component and the another component.

In addition, when a certain component is formed or disposed "on (above)" or "under (below)" each component in the description, the wording "on (above)" or "under (below)" refers to that two components make direct contact with each other, or at least one different component is formed or disposed between two components. In addition, the expression "on (above)" or "under (below)" may include an upper direction and a down direction from one component.

Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

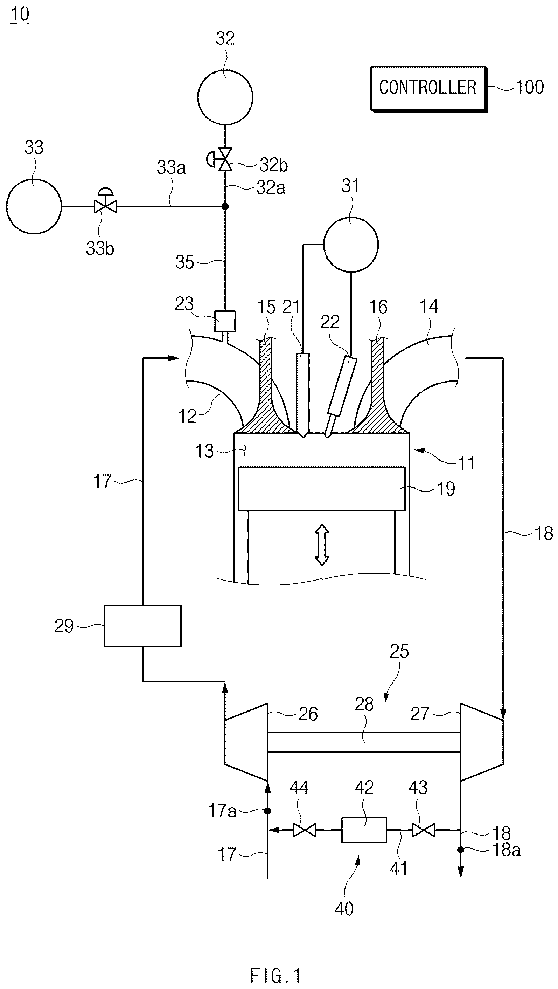

Referring to FIG. 1, a multi-fuel engine system 10 according to an embodiment of the present disclosure may include at least one cylinder 11 having a combustion chamber 13. The cylinder 11 may have the combustion chamber 13 defined therein, and a piston 19 may be configured to reciprocate in the combustion chamber 13. The cylinder 11 may have an intake port 12 which communicates with the combustion chamber 13 and an exhaust port 14 which communicates with the combustion chamber 13. An intake valve 15 may be configured to open and close the intake port 12, and an exhaust valve 16 may be configured to open and close the exhaust port 14.

An intake pipe 17 and an intake manifold (not illustrated) may be connected to the intake port 12, and intake air may be introduced into the intake port 12 through the intake pipe 17 and the intake manifold. As the intake valve 15 is opened, the intake air may be introduced into the combustion chamber 13 through the intake port 12.

An exhaust pipe 18 and an exhaust manifold (not illustrated) may be connected to the exhaust port 14, and exhaust gas may be discharged to the exhaust pipe 18 through the exhaust port 14 and the exhaust manifold. As the exhaust valve 16 is opened, the exhaust gas may be discharged from the combustion chamber 13 through the exhaust port 14.

Referring to FIG. 1, the multi-fuel engine system 10 according to an embodiment of the present disclosure may include a main injector 21 disposed on the combustion chamber 13, a pilot injector 22 spaced apart from the main injector 21, and a gas inflow valve 23 mounted on the intake port 12.

The main injector 21 may be configured to inject liquid fuel into the combustion chamber 13. The main injector 21 may be fluidly connected to a liquid fuel supply source 31 through a common rail, or a pump. For example, the liquid fuel may be diesel.

The pilot injector 22 may be configured to inject pilot fuel into the combustion chamber 13. According to an embodiment, the pilot fuel may be liquid fuel such as diesel. The pilot injector 22 may be fluidly connected to the liquid fuel supply source 31 through a common rail, or a pump.

The gas inflow valve 23 may be configured to inject at least one of gas fuel, or the mixture of gas fuel and hydrogen into the intake port 12. Particularly, the gas inflow valve 23 may be positioned at an upstream point of the intake valve 15, on the intake port 12. For example, the liquid fuel may be natural gas.

A gas fuel supply source 32 and a hydrogen supply source 33 may be fluidly connected to the gas inflow valve 23. The gas fuel may be supplied from the gas fuel supply source 32 to the gas inflow valve 23, and hydrogen may be supplied from the hydrogen supply source 33 to the gas inflow valve 23. As a flow rate for supplying hydrogen is determined, a flow rate for supplying the gas fuel may be relatively adjusted. Accordingly, the ratio for mixing the gas fuel and hydrogen may be determined. In particular, when a proportion of hydrogen, which is the decarbonized fuel, is relatively increased, the emission of the greenhouse gas may be minimized by sufficiently combusting unburned greenhouse gas in the combustion chamber 13.

The gas fuel supply source 32 may be fluidly connected to the gas inflow valve 23 through a gas fuel supply pipe 32a. A pressure control valve, a gas fuel control valve 32b, an opening and closing valve, or various sensors may be disposed in the gas fuel supply pipe 32a.

The hydrogen fuel supply source 33 may be fluidly connected to the gas inflow valve 23 through a hydrogen supply pipe 33a. A pressure control valve, a hydrogen control valve 33b, an opening and closing valve, or various sensors may be disposed in the hydrogen supply pipe 33a.

As the hydrogen control valve 33b controls the flow rate for supplying hydrogen, the gas fuel control valve 32b may relatively control the flow rate for supplying the gas fuel. Accordingly, the ratio for mixing the gas fuel and hydrogen may be determined.

The gas fuel supply pipe 32a and the hydrogen supply pipe 33a may be fluidly connected to the gas inflow valve 23 through a main supply pipe 35. Specifically, the gas fuel supply pipe 32a and the hydrogen supply pipe 33a may be jointed with each other at a first end (inlet) of the main supply pipe 35, and a second end (outlet) of the main supply pipe 35 may be connected to the gas inflow valve 23. Accordingly, the gas fuel supplied through the gas fuel supply pipe 32a and the hydrogen supplied through the hydrogen supply pipe 33a may be mixed at a specific ratio in the main supply pipe 35.

Referring to FIG. 1, the multi-fuel engine system 10 according to an embodiment of the present disclosure may include a turbocharger 25 which is disposed while crossing between the intake pipe 17 and the exhaust pipe 18 to communicate with the intake pipe 17 and the exhaust pipe 18. The turbocharger 25 may include a compressor 26 to compress external air introduced through the intake pipe 17, a turbine 27 rotated by the exhaust gas discharged through the exhaust pipe 18, and a common shaft 28 to link the compressor 26 to the turbine 27. A charge air cooler 29 may be disposed at a downstream point of the compressor 26, on the intake pipe 17.

Referring to FIG. 1, the multi-fuel engine system 10 according to an embodiment of the present disclosure may include an exhaust gas recirculating system 40 to recirculate a portion of the exhaust gas discharged from the exhaust port 14 toward the intake port 12.

The exhaust gas recirculating system 40 may include an EGR(Exhaust Gas Recirculation) conduit 41, which is disposed while crossing between the exhaust pipe 18 and the intake pipe 17, and an EGR cooler 42 disposed in the EGR conduit 41, to recirculate exhaust gas for mixing with fresh air.

According to an embodiment in FIG. 1, an inlet of the EGR conduit 41 may be connected to the exhaust pipe 18 at a downstream point of the turbine 27, and an outlet of the EGR conduit 41 may be connected to the intake pipe 17 at an upstream point of the compressor 26, such that the EGR conduit 41 forms a low pressure EGR path.

The EGR cooler 42 may be configured to cool EGR gas passing through the EGR conduit 41. An opening and closing valve 43 may be disposed at an upstream point of the EGR cooler 42. The EGR gas may pass through the EGR conduit 41 when the opening and closing valve 43 is opened, and the EGR gas may not pass through the EGR conduit 41 when the opening and closing valve 43 is closed. An EGR valve 44 may be disposed at a downstream point of the EGR cooler 42, and the EGR valve 44 may be configured to control the flow rate of the EGR gas discharged from the EGR cooler 42.

The EGR rate may be calculated using the concentration of $CO_2$ measured through an exhaust analyzer. The exhaust analyzer may measure an exhaust-side CO2 concentration ($CO2_e$) at a downstream point 18a of the turbine 27 of the turbocharger 25, and may measure an intake-side CO2 concentration ($CO2_i$) at an upstream point 17a of the compressor 26 of the turbocharger 25. When the exhaust gas is not recirculated, an atmospheric-side CO2 concentration ($CO2_{amb}$) may be measured at the upstream point 17a of the compressor 26. The CO2 concentration may be measured in units of vol %, and the EGR rate may be calculated through following Equation (1).

[Equation 1]

$$EGR\ Rate(\%) = \frac{CO2_i - CO2_{amb}}{CO2_e - CO2_{amb}} \times 100$$

A controller 100 may be configured to control operations of the intake valve 15, the exhaust valve 16, the gas fuel control valve 32b, the hydrogen control valve 33b, the main injector 21, the pilot injector 22, and the gas inflow valve 23 based on various fuel modes.

According to an embodiment, the controller 100 may be configured to detect maximum pressure ($P_m$), Center of Combustion (COC), and the EGR rate (E) of the cylinder 11 using various sensors while the multi-fuel engine system 10 is operating using the liquid fuel or the gas fuel, and to determine a proportion (R) of hydrogen to be mixed with the gas fuel, based on the internal pressure (P), the combustion central time COC, and the EGR rate (E), which are detected, of the cylinder 11. The center of combustion (COC) may be a time point at which half of the fuel supplied into the cylinder 11 is completely combusted. The controller 100 may control the proportion of the hydrogen and the proportion of the gas fuel by controlling the hydrogen control valve 33b and the gas fuel control valve 32b. Accordingly, the ratio for mixing of the gas fuel and hydrogen may be determined

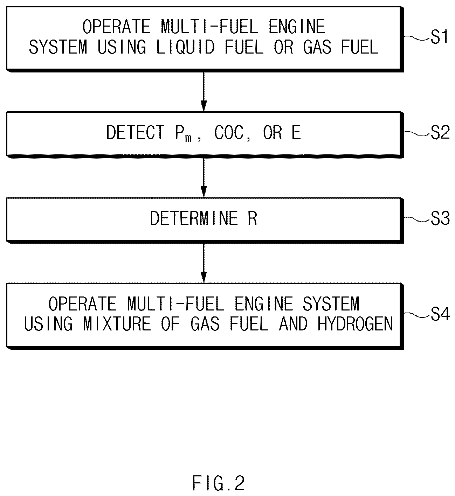

FIG. 2 is a view illustrating a method for controlling a multi-fuel engine system, according to an embodiment of the present disclosure.

Referring to FIG. 2, the liquid fuel or gas fuel is supplied to the combustion chamber 13 of the cylinder 11 and is burned to operate the multi-fuel engine system 10 (S1).

In the liquid fuel mode, as air is introduced into the intake port 12, and the intake valve 15 is opened, air is introduced into the combustion chamber 13 of the cylinder 11, and then the intake valve 15 is closed. As the piston 19 is moved up to a top dead point, the air introduced into the combustion chamber 13 is compressed. Thereafter, the main injector 21 injects the liquid fuel into the combustion chamber 13, such that the liquid fuel is combusted through the compression ignition.

In the gas fuel mode, as air is introduced into the intake port 12, the gas inflow valve 23 injects the gas fuel into the intake port 12, and the intake valve 15 is opened, the air and the gas fuel are introduced into the combustion chamber 13, and then the intake valve 15 is closed. As the piston 19 is moved up to the top dead point, the gas fuel and the air introduced into the combustion chamber 13 are compressed. Thereafter, the pilot injector 22 injects the pilot fuel into the combustion chamber 13, such that the gas fuel is ignited and combusted in the combustion chamber 13.

The controller 100 detects the maximum pressure ($P_m$), the center of combustion (COC), and the EGR rate (E) of the cylinder 11 using various sensors while the multi-fuel engine system 10 operates using the liquid fuel or the gas fuel (S2). The center of combustion (COC) may be a time point at which half of fuel supplied to the cylinder 11 is fully combusted.

The controller 100 determines the proportion (R) of hydrogen to be mixed with the gas fuel, based on the internal pressure P, the center of combustion (COC), and the EGR rate (E) of the cylinder 11, which are detected (S3). As the hydrogen control valve 33b is controlled to a specific opening degree, the proportion (R) of hydrogen is determined, and the gas fuel control valve 32b is relatively controlled, based on the determined proportion of hydrogen, such that the proportion of the gas fuel is determined, thereby determining the volume ratio for mixing of the gas fuel and hydrogen. For example, when the proportion of the hydrogen is determined to be 5 vol %, the proportion of the gas fuel may be determined to be 95 vol %.

According to an embodiment, in S3, the EGR rate (E) may be relatively increased to be maintained to be at most a set EGR rate ($E_t$), and the proportion (R) of hydrogen may be increased based on the increased EGR rate (E). The controller 100 may control the EGR valve 44 to relatively increase the opening degree of the EGR valve 44, such as the EGR rate (E) may be relatively increased.

The controller 100 operates the multi-fuel engine system 10 using a mixture of gas fuel and hydrogen (S4). Air is introduced into the intake port 12, the gas inflow valve 23 injects the mixture of gas fuel and hydrogen to the intake port 12, and the intake valve 15 is opened, such that the mixture of the gas fuel and the hydrogen, and the air are introduced into the combustion chamber 13. Then, the intake valve 15 is closed. As the piston 19 is moved to the top dead point, the mixture of the gas fuel and hydrogen, and the air, which are introduced into the combustion chamber 13, are compressed. The pilot injector 22 injects the pilot fuel to the combustion chamber 13 such that the mixture of the gas fuel and hydrogen in the combustion chamber 13 is ignited and combusted.

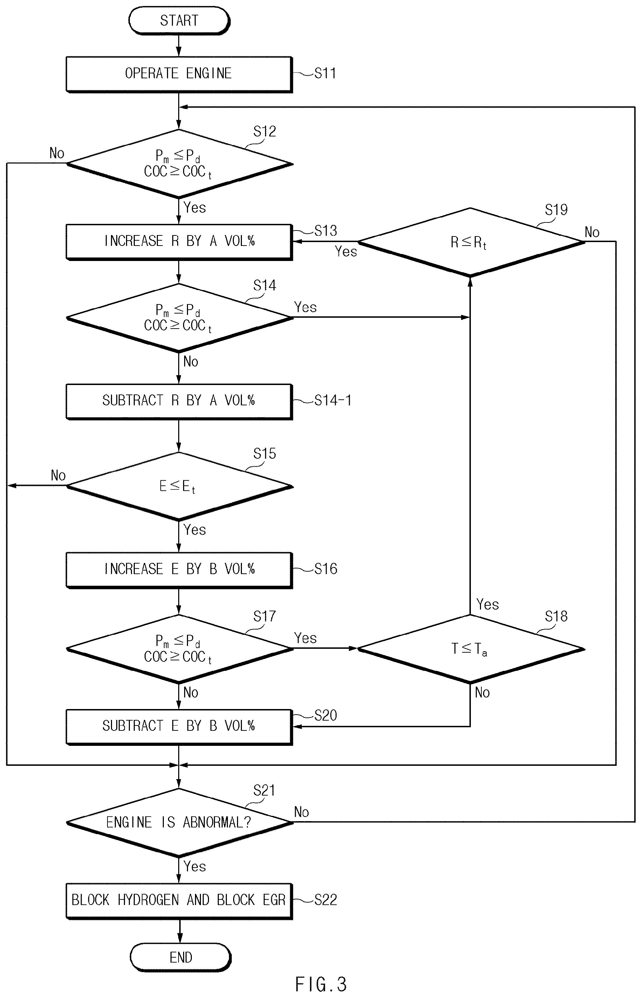

FIG. 3 is a view illustrating a method for controlling a multi-fuel engine system, according to an embodiment of the present disclosure in detail.

The liquid fuel or gas fuel is supplied to the combustion chamber 13 of the cylinder 11 and is burned to operate the multi-fuel engine system 10 (S11).

During the operation of the multi-fuel engine system 10, the controller 100 may determine whether the condition in which hydrogen is allowed to be mixed with the gas fuel (or a condition in which the proportion of hydrogen to be mixed to the gas fuel is an allowable proportion) is satisfied. According to an embodiment, the gas fuel may be, for example, natural gas, and hydrogen may be hydrogen. Hydrogen has a high flame speed. Accordingly, when the mixture of hydrogen (hydrogen) and gas fuel (gas fuel) is combusted in the combustion chamber 13 of the cylinder 11, the combustion speed and the center of combustion (COC) may be relatively rapid. Accordingly, the maximum pressure $(P_m)$ of the cylinder 11 may be relatively increased. In particular, when the proportion (R) of hydrogen (hydrogen) exceeds a set proportion (Rt), the center of combustion (COC) may be less than a set center of combustion $(COC_t)$ (the center of combustion becomes earlier than the set combustion center time). Accordingly, the maximum pressure $(P_m)$ of the cylinder 11 may exceed design pressure $(P_d)$ of the cylinder 11. Accordingly, the detected maximum pressure of the cylinder 11 is compared with the design pressure $(P_d)$ of the cylinder 11, and the detected center of combustion (COC) is compared with the set center of combustion $(COC_t)$ to determine whether the condition in which hydrogen is allowed to be mixed with the gas fuel is satisfied. The set center of combustion $(COC_t)$ may be center of combustion detected when the multi-fuel engine system 10 operates in a state in which hydrogen is not supplied.

Specifically, the condition in which hydrogen is allowed to be mixed with the gas fuel may be a condition in which the detected maximum pressure $(P_m)$ of the cylinder 11 is at most the design pressure $(P_d)$ of the cylinder 11 and the detected center of combustion (COC) is at least the set center of combustion $(COC_t)$.

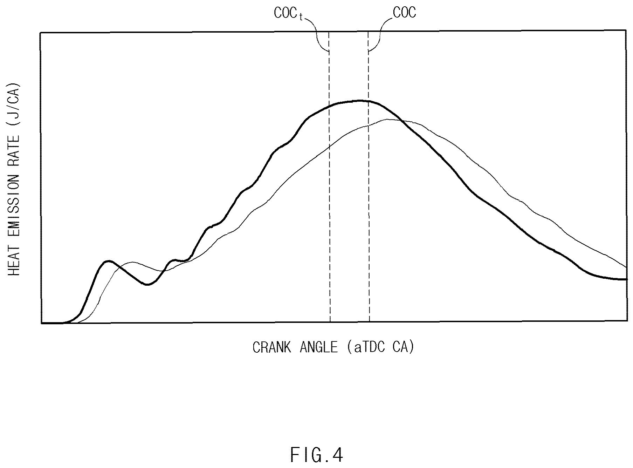

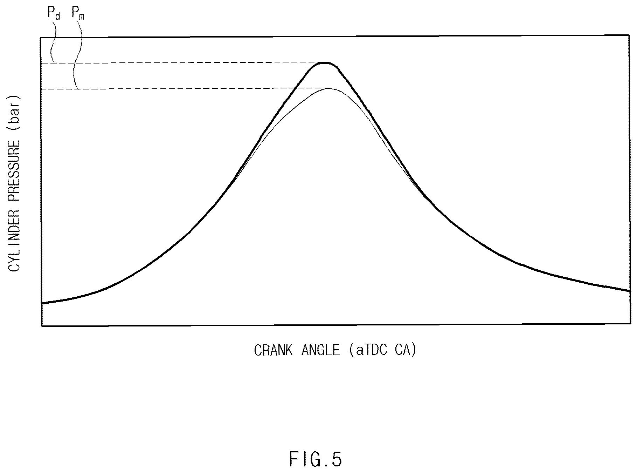

Referring to FIG. 3, the controller 100 may determine whether the condition in which hydrogen is allowed to be mixed with the gas fuel is satisfied, by determining whether the detected maximum pressure (Pm) of the cylinder 11 is at most the design pressure (Pd) of the cylinder 11 (see FIG. 4), and by determining whether the detected center of combustion (COC) is at least the set center of combustion $(COC_t)$ (see FIG. 5) (S12).

In S12, when it is determined that the maximum pressure $(P_m)$ of the cylinder 11 detected is at most the design pressure $(P_d)$ of the cylinder 11 and the detected center of combustion (COC) is at least the set center of combustion $(COC_t)$, the controller 100 may determine that the condition in which hydrogen is allowed to be mixed with the gas fuel is satisfied. Accordingly, the proportion (R) of hydrogen is increased by a specific value (a vol %) (S13). In the operating condition in which the multi-fuel engine system 10 operates with only liquid fuel or gas fuel, since hydrogen is not added, the proportion (R) of hydrogen to be mixed with the gas fuel may be 0 vol %, and the proportion (R) of hydrogen may be gradually increased by a specific value (a vol %) from 0 vol %.

After the proportion (R) of hydrogen is increased by the specific value (a vol %) in S13, the controller 100 may re-determine whether the condition in which hydrogen is allowed to be mixed with the gas fuel is satisfied. Specifically, the controller 100 may re-determine whether the detected maximum pressure $(P_m)$ of the cylinder 11 is at most the design pressure $(P_d)$ of the cylinder 11 and the detected center of combustion (COC) is at least the set center of combustion $(COC_t)$ to re-determine whether the condition in which hydrogen is allowed to be mixed with the gas fuel is satisfied (S14).

When it is determined that the maximum pressure $(P_m)$ of the cylinder 11 exceeds the design pressure $(P_d)$ of the cylinder 11 and the detected center of combustion (COC) is less than the set center of combustion $(COC_t)$ in S14, the controller 100 may not determine that the condition in which hydrogen is allowed to be mixed with the gas fuel is satisfied, and may subtract the proportion (R) of hydrogen by the specific value (a vol %) (S14-1). In other words, as the proportion (R) of hydrogen is subtracted by the specific value (a vol %), the proportion (R) of hydrogen is reduced to the proportion of hydrogen (i.e. the hydrogen ratio detected in S12) in S12 before being increased may be reduced. Thereafter, the controller 100 determines whether the detected EGR rate (E) is at most the set EGR rate $(E_t)$ (S15). The center of combustion (COC), which is less than the set center of combustion $(COC_t)$, refers to that the combustion center time (COC) is earlier than the set combustion center time $(COC_t)$. When the center of combustion (COC) is less than the set center of combustion $(COC_t)$, as the center of combustion (COC) relatively early comes, the maximum pressure $(P_m)$ of the cylinder 11 may exceed the design pressure $(P_d)$ of the cylinder 11. When the maximum pressure $(P_m)$ of the cylinder 11 exceeds the design pressure $(P_d)$ of the cylinder 11, the proportion of hydrogen to be mixed with the gas fuel may not be relatively increased.

The set EGR rate $(E_t)$ may be a reference EGR rate for determining whether the combustion of the multi-fuel engine system 10 is stably performed. The set EGR rate $(E_t)$ may be variously set depending on specifications and operating conditions of the multi-fuel engine system 10. When the EGR rate (E) is at most the set EGR rate $(E_t)$, the combustion of the multi-fuel engine system 10 may be stable, and when the EGR rate (E) exceeds the set EGR rate $(E_t)$, the combustion of the multi-fuel engine system 10 may become unstable.

When it is determined that the EGR rate (E) is at most the set EGR rate $(E_t)$ in S15, the EGR rate (E) is increased by a specific value (b %) (S16). The controller 100 may control the EGR valve 44 to relatively increase the opening degree of the EGR valve 44, such that the EGR rate (E) may be relatively increased. As the EGR rate (E) is relatively increased, the concentration of the oxygen in the combustion chamber 13 of the cylinder 11 may be relatively decreased. Accordingly, since the center of combustion is relatively delayed, the center of combustion (COC) may be at least the set center of combustion $(COC_t)$ (see FIG. 4), and the maximum pressure $(P_m)$ of the cylinder 11 may be relatively decreased (see FIG.

5). As described above, when the EGR rate (E) is relatively increased, the center of combustion (COC) may be relatively delayed, and the maximum pressure (Pm) of the cylinder 11 may be relatively decreased.

After the EGR rate (E) is increased by the specific value (b %) in S16, the controller 100 may re-determine whether the condition in which hydrogen is allowed to be mixed with the gas fuel is satisfied. Specifically, the controller 100 may determine whether the detected maximum pressure ($P_m$) of the cylinder 11 is at most the design pressure ($P_d$) of the cylinder 11 and the detected center of combustion (COC) is at least the set center of combustion ($COC_t$) to determine whether the condition in which hydrogen is allowed to be mixed with the gas fuel is satisfied (S17).

When it is determined that the maximum pressure ($P_m$) of the cylinder 11 detected is at most the design pressure ($P_d$) of the cylinder 11 and the detected center of combustion (COC) is at least the set center of combustion ($COC_t$) in S17, the controller 100 may determine that the condition in which hydrogen is allowed to be mixed with the gas fuel is satisfied, and may determine whether an inlet-side temperature (T) of the turbine 27 of the turbocharger 25 is at most a set temperature ($T_a$) (S18). The set temperature ($T_a$) may be a safety temperature for determining whether the turbine 27 is damaged.

When it is determined that the inlet-side temperature (T) of the turbine 27 is at most the set temperature ($T_a$) in S 18, the controller 100 may determine whether the proportion (R) of hydrogen is at most the set proportion ($R_t$) (S19).

When it is determined that the proportion (R) of hydrogen is at most the proportion ($R_t$) in S19, the control method of the present disclosure may return to S13. Accordingly, the controller 100 increases the proportion (R) of hydrogen by the specific mixing ratio (a vol %) (S13). In other words, the proportion (R) of hydrogen may be gradually increased by the specific mixing ratio (a vol %) based on the EGR rate (E) and the inlet-side temperature (T) of the turbine 27.

As described above, after the EGR rate (E) is increased to be maintained to be at most the set EGR rate ($E_t$), the proportion (R) of hydrogen is increased to be maintained to be at most the set proportion (Rt), thereby improving the combustion efficiency of the multi-fuel engine system 10 and rapidly reducing the discharge of the greenhouse gas (nitrogen oxide, or methane gas).

When it is determined that the maximum pressure ($P_m$) of the cylinder 11 is at most the design pressure ($P_d$) of the cylinder 11 and the detected center of combustion (COC) is at least the set center of combustion ($COC_t$) in S14, the controller 100 may determine whether the proportion (R) of hydrogen is at most the set proportion ($R_t$) (S19).

When it is determined that the inlet-side temperature (T) of the turbine 27 exceeds the set temperature ($T_a$) in S18, the controller 100 may subtract the EGR rate (E) by the specific value (b %) (S20). The controller 100 may control the EGR valve 44 to decrease the opening degree of the EGR valve 44 by a specific opening degree, such that the EGR rate (E) may be subtracted by the specific value (b %). As the EGR rate (E) is subtracted by the specific value (b %), the EGR rate (E) may be reduced to the EGR rate (i.e. the EGR rate detected in S15) before the EGR rate (E) is increased in S16.

After the EGR rate (E) is subtracted by the specific value (b %), the controller 100 determines whether the multi-fuel engine system 10 is under an abnormal condition (S21).

The abnormal condition of the multi-fuel engine system 10 may be a condition in which the multi-fuel engine system 10 abnormally operates due to various causes, such as the state of gas trip, emergency shut down, the multi-fuel engine system 10 shut down, or a mode change of the multi-fuel engine system 10. Hereinafter, the gas trip refers to a phenomenon in which fuel is not completely combusted due to abnormal combustion in the combustion chamber 13 of the cylinder 11 and discharged to the exhaust pipe.

When it is determined that the multi-fuel engine system 10 is under the abnormal condition in S21, the hydrogen control valve 33b is completely closed to block hydrogen, and the opening and closing valve 43 of the exhaust gas recirculating system 40 is completely closed to block the EGR (S22).

When it is determined that the multi-fuel engine system 10 is under a normal condition rather than the abnormal condition, in S21, the control method of the present disclosure returns to S12.

When it is determined that the maximum pressure ($P_m$) of the cylinder 11 detected exceeds the design pressure ($P_d$) of the cylinder 11 and the detected center of combustion (COC) is less than the set center of combustion ($COC_t$) in S12, the controller 100 determines whether the multi-fuel engine system 10 is under the abnormal condition (S21).

When it is determined that the EGR rate (E) exceeds the set EGR rate ($E_t$) in S15, the controller 100 determines whether the multi-fuel engine system 10 is under the abnormal condition (S21).

The above description is merely an example of the technical idea of the present disclosure, and various modifications and variations may be made by one skilled in the art without departing from the essential feature of the present disclosure.

Therefore, embodiments of the present disclosure are provided to explain the spirit and scope of the present disclosure, but not to limit them, so that the spirit and scope of the present disclosure is not limited by the embodiments. The scope of protection of the present disclosure should be construed by the attached claims, and all equivalents thereof should be construed as being included within the scope of the present disclosure.

**Claims**

1. A method for controlling a multi-fuel engine system configured to use gas fuel and hydrogen, the method comprising:

   detecting maximum pressure and center of combustion of a cylinder during operation of the multi-fuel engine system; and
   determining a proportion of hydrogen to be mixed with the gas fuel, based on the maximum pressure and the center of combustion, which are detected, of the cylinder.

2. The method of claim 1, wherein whether a condition in which hydrogen is allowed to be mixed with the gas fuel is satisfied, is determined, and
   wherein the proportion of hydrogen to be mixed with the gas fuel is determined depending on whether the condition in which hydrogen is allowed to be mixed with the gas fuel is satisfied.

3. The method of claim 2, wherein the condition in which hydrogen is allowed to be mixed with the gas fuel is a condition in which the detected maximum pressure of the cylinder is at most design pressure of the cylinder, and the detected center of combustion is at least set center of combustion.

4. The method of claim 2, wherein the proportion of hydrogen is increased to be maintained to be at most a set proportion, when the condition in which hydrogen is allowed to be mixed with the gas fuel is satisfied.

5. The method of claim 4, wherein, whether the condition in which hydrogen is allowed to be mixed with the gas fuel is satisfied, is re-determined after the proportion of hydrogen is increased, and
   wherein the proportion of hydrogen is decreased to the proportion of hydrogen before the proportion of hydrogen is increased, when the condition in which hydrogen is allowed to be mixed with the gas fuel is not satisfied.

6. The method of claim 2, wherein an EGR is detected during the operation of the multi-fuel engine system, an EGR rate is increased to be maintained to be at most a set EGR rate, and the proportion of hydrogen is increased based on the increased EGR rate.

7. The method of claim 6, wherein the EGR rate is increased to be maintained to be at most the set EGR rate, when the condition in which hydrogen is allowed to be mixed with the gas fuel is not satisfied, and
   wherein whether the condition in which hydrogen is allowed to be mixed with the gas fuel is satisfied, is re-determined, after the EGR rate is increased.

8. The method of claim 7, wherein the proportion of hydrogen is increased based on the increased EGR rate, to be maintained to be at most a set proportion, when the condition in which hydrogen is allowed to be mixed with the gas fuel is satisfied, after the EGR rate is increased.

9. The method of claim 7, wherein the EGR rate is decreased to the EGR rate before the EGR rate is increased, when the condition for allowing hydrogen to be mixed with the gas fuel is not satisfied after the EGR rate is increased.

10. The method of claim 7, wherein whether an inlet-side temperature of a turbine of a turbocharger is at most a set temperature, when the condition for allowing hydrogen to be mixed with the gas fuel is satisfied, after the EGR rate is increased,

    wherein the proportion of hydrogen is increased, based on the increased EGR rate, to be maintained to be at moat the set proportion, when the intake-side temperature of the turbine is at most the set temperature, and
    wherein the EGR rate is decreased to an EGR rate before the EGR rate is decreased, when the inlet-side temperature of the turbine exceeds the set temperature.

11. A multi-fuel engine system comprising:

    a cylinder including a combustion chamber, an intake port communicating with the combustion chamber, and an exhaust port communicating with the combustion chamber;
    a gas inflow valve configured to inject at least one of gas fuel or a mixture of the gas fuel and hydrogen into the intake port; and
    a controller configured to determine a proportion of hydrogen to be mixed with the gas fuel, based on maximum pressure of the cylinder, and center of combustion of the cylinder.

**12.** The multi-fuel engine system of claim 11, further comprising:

a gas fuel supply source fluidly connected to the gas inflow valve through a gas fuel supply pipe;
a gas fuel control valve disposed in the gas fuel supply pipe;
a hydrogen supply source fluidly connected to the gas inflow valve through a hydrogen supply pipe; and
a hydrogen control valve disposed in the hydrogen supply pipe,
wherein the controller is configured to control a flow rate control valve in the gas fuel supply pipe and a flow rate control value in the hydrogen supply pipe.

**13.** The multi-fuel engine system of claim 12, wherein the gas fuel supply pipe and the hydrogen supply pipe are jointed with each other in a main supply pipe, and
wherein the main supply pipe is linked to the gas inflow valve.

**14.** The multi-fuel engine system of claim 11, wherein the controller is configured to:

detect an EGR rate during an operation of the multi-fuel engine system, increase the EGR rate to be maintained to be at most a set EGR rate; and
increase the proportion of hydrogen based on the increased EGR rate.

**15.** The multi-fuel engine system of claim 11, wherein the controller is configured to:

determine whether a condition in which hydrogen is allowed to be mixed with the gas fuel is satisfied during an operation of the multi-fuel engine system; and
determine a proportion of hydrogen to be mixed with the gas fuel, depending on whether the condition in which hydrogen is allowed to be mixed with gas fuel is satisfied.

10

32

33

33a

32b
32a

CONTROLLER — 100

31

33b

35

23

15 21 22 16 14

12

13 11

17 19

18

29

25

26 28 27

44 42 43

17a

18
18a

17 41

40

FIG.1

```
┌─────────────────────────────────────────────┐
│        OPERATE MULTI-FUEL ENGINE            │
│   SYSTEM USING LIQUID FUEL OR GAS FUEL      │ ~S1
└─────────────────────────────────────────────┘
                      │
                      ▼
┌─────────────────────────────────────────────┐
│           DETECT P_m, COC, OR E             │ ~S2
└─────────────────────────────────────────────┘
                      │
                      ▼
┌─────────────────────────────────────────────┐
│                DETERMINE R                  │ ~S3
└─────────────────────────────────────────────┘
                      │
                      ▼
┌─────────────────────────────────────────────┐
│        OPERATE MULTI-FUEL ENGINE SYSTEM      │
│   USING MIXTURE OF GAS FUEL AND HYDROGEN    │ ~S4
└─────────────────────────────────────────────┘
```

FIG.2

FIG.3

FIG.4

FIG.5

## INTERNATIONAL SEARCH REPORT

| International application No. |
| --- |
| **PCT/KR2024/005210** |

### A. CLASSIFICATION OF SUBJECT MATTER

**F02D 41/00**(2006.01)i; **F02D 19/06**(2006.01)i; **F02D 35/02**(2006.01)i; **F02D 41/30**(2006.01)i

According to International Patent Classification (IPC) or to both national classification and IPC

### B. FIELDS SEARCHED

Minimum documentation searched (classification system followed by classification symbols)

F02D 41/00(2006.01); F01N 3/08(2006.01); F02B 3/00(2006.01); F02D 19/02(2006.01); F02D 19/08(2006.01); F02D 19/12(2006.01); F02M 25/07(2006.01); F02M 25/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 엔진(engine), 가스 연료(gas fuel), 수소(hydrogen), 최대 압력(maximum pressure), 연소중앙시기(combustion central timing), 수소 비율(hydrogen ratio), 제어(control)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2015-0138887 A (KOOKMIN UNIVERSITY INDUSTRY ACADEMY COOPERATION FOUNDATION) 11 December 2015 (2015-12-11)<br>See paragraphs [0013]-[0032] and figures 1 and 2. | 1-15 |
| A | JP 2012-102632 A (HONDA MOTOR CO., LTD.) 31 May 2012 (2012-05-31)<br>See paragraphs [0001], [0021] and [0033], claim 1 and figure 1. | 1-15 |
| A | KR 10-0799306 B1 (KOREA INSTITUTE OF MACHINERY & MATERIALS) 29 January 2008 (2008-01-29)<br>See paragraphs [0029]-[0036] and figures 1 and 2. | 1-15 |
| A | US 4742801 A (KELGARD, Erik) 10 May 1988 (1988-05-10)<br>See column 1, line 46 - column 3, line 36 and figure 1. | 1-15 |
| A | JP 7202063 B2 (JAPAN ENGINE CORP.) 11 January 2023 (2023-01-11)<br>See claims 1-3 and figure 1. | 1-15 |

| ☐ Further documents are listed in the continuation of Box C. | ☑ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **26 July 2024** | **26 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/005210**

| Patent document cited in search report | | | Publication date (day/month/year) | Patent family member(s) | | | Publication date (day/month/year) |
|---|---|---|---|---|---|---|---|
| KR | 10-2015-0138887 | A | 11 December 2015 | None | | | |
| JP | 2012-102632 | A | 31 May 2012 | JP | 5530338 | B2 | 25 June 2014 |
| KR | 10-0799306 | B1 | 29 January 2008 | None | | | |
| US | 4742801 | A | 10 May 1988 | None | | | |
| JP | 7202063 | B2 | 11 January 2023 | CN | 111033017 | A | 17 April 2020 |
| | | | | CN | 111033017 | B | 08 July 2022 |
| | | | | JP | 2019-039324 | A | 14 March 2019 |
| | | | | KR | 10-2020-0020933 | A | 26 February 2020 |
| | | | | KR | 10-2230322 | B1 | 19 March 2021 |
| | | | | WO | 2019-039365 | A1 | 28 February 2019 |

Form PCT/ISA/210 (patent family annex) (July 2022)

**REFERENCES CITED IN THE DESCRIPTION**

**Patent documents cited in the description**

• KR 1020230052949